(19) Europäisches Patentamt
European Patent Office
Office européen des brevets

(11)   **EP 2 675 554 B1**

(12)   **EUROPEAN PATENT SPECIFICATION**

(45) Date of publication and mention
of the grant of the patent:
**08.07.2020   Bulletin 2020/28**

(51) Int Cl.:
*B01F 13/10* (2006.01)        *C02F 1/00* (2006.01)
*C02F 1/28* (2006.01)        *C02F 1/36* (2006.01)
*C02F 1/48* (2006.01)        *C02F 1/52* (2006.01)
*C02F 1/72* (2006.01)        *C02F 1/76* (2006.01)
*C02F 1/78* (2006.01)        *C02F 9/00* (2006.01)
*B01F 5/16* (2006.01)        *B01F 5/04* (2006.01)

(21) Application number: **12721904.6**

(22) Date of filing: **31.01.2012**

(86) International application number:
**PCT/IB2012/000193**

(87) International publication number:
**WO 2012/110864 (23.08.2012 Gazette 2012/34)**

(54) **METHOD FOR TREATING A CONTAMINATED FLUID**

VERFAHREN ZUR BEHANDLUNG EINER KONTAMINIERTEN FLÜSSIGKEIT

PROCÉDÉ POUR TRAITER UN FLUIDE CONTAMINÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.02.2011   US 201161444115 P
13.09.2011   US 201113230850**

(43) Date of publication of application:
**25.12.2013   Bulletin 2013/52**

(73) Proprietors:
• **Aquasoil S.r.l.
72015 Fasano, BR (IT)**
• **Santoro, Oronzo
72015 Fasano, BR (IT)**

(72) Inventors:
• **SANTORO, Oronzo
I-72015 Fasano (BR) (IT)**

• **PASTORE, Tiziano
I-74015 Martina Franca (TA) (IT)**
• **MOGHADDAMI, Mostafa
Tehran (IR)**
• **RAISEE, Mehrdad
Tehran (IR)**
• **CRAPULLI, Ferdinando
I-74100 Taranto (IT)**
• **SANTORO, Domenico
I-72015 Fasano (BR) (IT)**

(74) Representative: **Lambrinos, Matthew Franklin
Franklin & Associates International
1025a
Finchley Road
London NW11 7ES (GB)**

(56) References cited:
**GB-A- 2 005 655        US-A- 5 069 783
US-A- 5 888 403        US-A1- 2010 270 240
US-A1- 2010 320 147        US-B1- 6 416 213**

**Description**

**FIELD OF THE INVENTION**

One or more embodiments of the invention generally relate to fluid treatment. More particularly, the invention relates to an integrated process for fluid treatment.

**BACKGROUND OF THE INVENTION**

In conventional fluid treatment plants (FTP), processes and technologies are typically applied in series (e.g., stage by stage) to achieve multiple treatment objectives. For example, fluid treatments such as, but not limited to, coagulation, filtration, disinfection, and advanced oxidation, which can be found typically in drinking water and wastewater treatment plants, are used sequentially to remove organic suspended solids, pathogens, chemical and biochemical oxygen demand, natural organic matter, and other micro and macro pollutants. In coagulation and flocculation processes, aggregation of dispersed and colloidal material is promoted by adding polyvalent cations to form larger-sized flocs, which can eventually be removed by settling or filtration. Disinfection and advanced oxidation are further polishing steps entailing the use of physical or chemical oxidants to inactivate pathogens and/or to destroy persistent micropollutants such as, but not limited to, pharmaceuticals, personal care products and endocrine disrupting compounds.

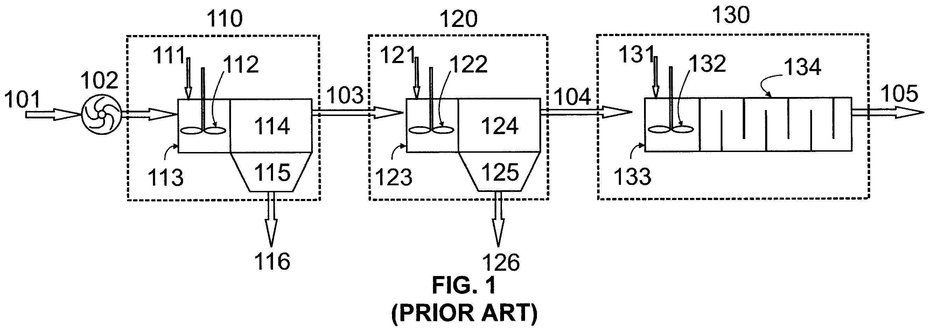

In all these stages, *ad-hoc* chemical, biological and physical compounds (e.g. treating agents) are introduced into the contaminated fluid stream separately in a sequential manner while mixing is provided via active (e.g., rotating) or passive (e.g. static) blades. FIG. 1 is a schematic representation of a technique for water or wastewater treatment, in accordance with the prior art. In this representation, the typical sequential processes for contaminated fluid treatment are shown. Untreated fluid 101 is introduced into a flocculation stage 110 using a pump 102. Once fluid 101 is loaded into a rapid-mix vessel 113, a coagulant 111 is added to fluid 101 using a metering pump or by gravity, and then mixed in rapid-mix vessel 113 using large rotating blades 112. Fluid 101 is then directed, either by gravity or through other pumps, to a flocculation tank 114 where mild agitation conditions are created to promote floc formation. Flocs, in the form of sludge, are then separated in a settling tank 115, and flocculated sludge 116 is periodically withdrawn from the bottom of tank 115 and properly treated and/or disposed.

The flocculation stage 110 can be followed or enhanced by the addition of an absorbent 121 in a coagulation stage 120 if further treatment is required. Similarly as for flocculation stage 110, adsorbent 121 is added to fluid 103 and then properly mixed in a rapid mix vessel 123, for example, using rotating blades 122. Fluid 103 mixed with adsorbent 121 then enters a settling tank 124 that separates the exhausted absorbent 121 from treated water 104 while generating sludge 126, which is finally drained from the bottom of a second settling tank 125.

When the microbial or micropollutant contamination exiting the coagulation, flocculation and absorption stages still exceeds the maximum allowed concentration, treated water 104 is subjected to further treatment such as a disinfection/advanced oxidation stage 130, a process meant to remove disease-causing organisms and potentially toxic or carcinogenic micropollutants from the fluid stream. Thus, a disinfectant and/or oxidant 131 is delivered to treated water 104 via a metering device and then mixed to ensure proper dispersion with a mixing device such as a rotating blades portion 132 in a rapid mixing zone 133. Once disinfectant and/or oxidant 131 is/are properly dispersed in treated water 104, a contact tank 134 allows the pathogens/micropollutants to accumulate the needed dose and contact time for inactivation/oxidation.

Finally, a treated fluid 105 can be supplied for drinking purposes, discharged into a receiving body (e.g., a lake, the soil, an ocean, etc.) or reused for agricultural, industrial or recreational purposes. As clearly shown in FIG. 1, this treatment scheme is made of several processes in series and contains several sequential stages. As a result, various technologies are needed, and various treating agents are injected in sequence in order to promote and complete the treatment. Even when simplified treatment schemes are considered (e.g. treatment schemes where some of the treatment stages shown in FIG.1 are omitted), these processes are still energy and footprint intensive, as the stages requires specific pumps and mixers to move the fluid from one stage to the next as well as to effectively disperse the treating agents into the contaminated fluid in the various stages.

In fluid treatment applications, mixing is often needed in order to enhance treatment performance and efficiency. As an example, effective rapid mixing generally ensures the fluid particles comes into contact with the injected treating agents for the designated time such that purification reactions get initiated and occur over time. It is well documented the lack of mixing is responsible for diffusion-limited or incomplete reactions, known as one of the main causes of treatment inefficiency and undesired byproduct formation in chemical reactor engineering. Therefore, proper rapid mixing leads to maximization of process efficiency and minimization of treatment time (and cost) for a given treatment objective. It is equally relevant that a reactor is designed in a way that the contact time experienced by a parcel of fluid is as uniform as possible, which would lead to a maximization of process efficiency and minimization of treating agents' usage and undesired byproduct formation. It is therefore an objective of the present invention to provide an effective, fully controllable, modular and integrated mixing/treatment means for the purification of a contaminated fluid.

Mixing and treatment operations often are complex and multi-faceted. They can involve single-phase liquid mixing/treatment as well as multiphase mixing/treatment (liquid-liquid mixing, solid-liquid mixing, gas-liquid mixing, and, in some cases, three-phase mixing involving solids, liquids and gases).

Among various methods to promote mixing between treating agents and the contaminated fluid, the use of rotating blades in a mixing tank is probably the oldest and most widely used for fluid treatment. A primary function of such mixing vessels is to provide adequate stirring in vessels of various shapes and sizes. Baffles may or may not be incorporated in the vessels to break up the vortex and also to prevent solid-body rotation of the fluid. Pipes are appropriately located in the vessel to load and unload the fluid. Dip tubes are often employed to inject chemicals and fluids at specific locations. The type of rotating blades employed depends on the type of the vessel and the process objective.

One example of a currently known mixing tank comprises a vessel and two special blades that help produce a large mixing zone which, after adequate time, provides a thorough blending of such liquids.

Another current means of providing mixing is a mixing nozzle apparatus. In this mixing means, a polymer is introduced using special nozzles into a flowing fluid stream to produce a resultant thickened mixture for application in fire extinction. In the fluid mixing nozzle apparatus, two fluids enter into a relatively large vessel and exit through a convergence-divergence channel. The device provides a fluids mixing nozzle that is capable of mixing and atomizing fluids at low pressures. The use of such nozzles may generate substantial hydraulic head losses, and in many high flow-rate applications the hydraulic head losses are highly undesirable.

The use of elbow pipe to enhance mixing has also been previously exploited. More specifically, a fluid mixer apparatus for mixing a carrier liquid such as water with the second liquid substance can be made in the form of an elbow pipe interconnecting the carrier liquid inlet with a discharge pipe. The second liquid is introduced into the fluid stream of the carrier liquid at a point on the outer radius of the elbow where the high velocity stream of carrier liquid impinges upon the side of the elbow pipe to cause the second liquid to be impinged upon by the carrier stream at the point of its highest velocity to impart maximum shear to the agent liquid, thus ensuring maximum mixing of two liquids in the discharge pipe. Since the generated shear rates in the elbow are not significantly high and typically are not considered to be highly anisotropic, this method tends to not produce a uniform mixture. To further enhance mixing performance, more than one mixing elbow may be employed. In an assembly of pipe elbows for mixing and transporting substances along an assembly, assemblies of three pipe elbows are connected successively. Elbow assemblies have an inlet and an outlet disposed in parallel planes and axially offset from one another. The pipe elbows associated with a group have centerlines disposed in mutually perpendicular planes to cause the mixture to rotate as it travels along the pipe elbows.

In some processes (such as sulfuric or hydrofluoric acid alkylation of hydrocarbons), it is helpful that two fluids are mixed together before they come in contact with a third fluid. This can be achieved by an apparatus comprising an inner and outer tube concentrically arranged to form an injection nozzle, which itself is placed within a circulating conduit. The inner tube and the outer tube have ports located on their sidewalls to allow the passage of a fluid through the first tube and into the second tube forming a mixture that leaves the outer tube through ports thereon and enters a circulation vessel. As a result of the many small ports in this system, the pressure drop is large and the system may not be ideal for accommodating large flow rates.

A mixing device to increase the mixing efficiency is an enhanced-mixing corrugated jet pump. A corrugated jet pump incorporates a corrugated annular nozzle o-give that, during pumping operations, creates alternating low and high velocity zones in the o-give of the nozzle. These different velocity zones propagate shear planes that enhance the jet pumps downstream of the mixing. At the same time, the core of the corrugated annular nozzle ring creates alternating vortices in the low and high energy fluids, which also enhances mixing. Two vortices per crown region are generated. These vortices, or swirling actions, partially enhance the jet pump's mixing action.

Another method for mixing fluids uses a pin-based mixing pump. In this method, pins are placed to extend inwardly from a cylindrical housing and outwardly from a coaxial rotor shaft in intermeshing fashion. The pins are generally cylindrical in shape except for a set of half cylindrical pins on the rotor shaft designated for pumping of materials through the housing device. Flow through-put is further enhanced by a set of axially positioned vanes extending from the housing inwardly toward the rotor shaft with curved ends forming a scoop to receive materials being given a rotary flow component about the shaft by its rotation and convert the flow direction to an axial flow path.

Yet another prior art means for mixing fluids describes a mixing pump for pumping fluid from a reservoir with means for injecting additional fluids into the fluid stream on the suction side of the pump and on the discharge side of the pump. The fluids that are injected on the suction side of the pump are mixed with the fluid from the reservoir as these fluids pass through the impeller of the pump. The mixing pump provides effective mixing of the fluids. However, the injection means introduce the injected fluids into the fluid stream at once near the same location and do not enable fluids to be injected and mixed into the fluid stream in a prescribed sequence, and is helpful or needed in some fluid treatment systems. Also, in the present mixing means, the injection means are placed between the inlet and the pump impeller. This causes some of the fluids being injected to potentially escape through the inlet to contaminate the reservoir, and is undesirable in some treatment processes such as, but not limited to, chemigation. In addition, the inlet of the pump is a bell or scoop that is inserted into a tank or reservoir, which provides little flexibility when using these mixing means in fluid treatment systems as it may be difficult to incorporate a tank or reservoir into some systems. Furthermore, the pump has a fixed number of injectors, which also restricts the flexibility of this mixing means. From a mixing/treatment standpoint, the flexibility of the present means is further restricted by the fixed rotational speed of the pump, which would not allow controllable shear rate, mixing gradient, contact time and delivered treating agent dose. Furthermore, such mixing means does not contemplate the use of a catalytic material on the pump body which can promote reactions given the high mixing gradient generated by the pump rotor. Lastly, the mixing means described above would not allow a stage integration between the pumping operation, the treatment and the subsequent separation stage (such as, but not limited to, a pressurize filter) if present.

The chemical induction flash mixers represent another example of prior art. Although such mixing means do enhance mixing and the diffusion of the treating agent into the bulk fluid, it does not allow a full integration of the mixing and treatment stages. Also, it does not enable a precise control of the mixing gradient, gradient dose and contact time as the rotor speed may not be operated at variable speed. The chemical induction flash mixers are not usually suitable to provide a positive head pressure the fluid and are not suitable as multiple arrays of mixers in series or in parallel. As such, they are not typically effective as a means to control the mixing gradient and the contact time.

In view of the foregoing, there is a need for improved techniques for providing a more efficient, adaptable and integrated mixing/treatment method consisting of an effective mixing system and a processing tank unit for the treatment of a contaminated fluid that uses solid, gaseous or liquid treating agents.

United States Patent US 6 416 213 B discloses coagulating/condensing device including a spiral coagulating pipe composed of a spiral mixing pipe formed by inner and outer pipes of a multiple pipe with an inner pipe having an opening thereof formed in the outer pipe to face downstream to floc the solids by causing liquids at different electric potentials separately supplied from the inner and outer pipes to contact with each other.

United States Patent Application Publication US 2010/0270240 discloses continuous flow water treatment systems, devices and methods that reduce the costs associated with using oxidizing agents in water treatment by maximizing mixing energy with pressure of the solution in a continuous flow system.

French Patent Publication FR 2120 292 A relates to devices for the mixing of a liquid with another or the dissolution of a fluid in another.

## BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a schematic representation of a technique for water or wastewater treatment, in accordance with the prior art;

FIG. 2 shows an exemplary sequence of the mode of action of a high-energy pump-mixer, in accordance with an embodiment of the present invention;

FIGS. 3A is a schematic representations of exemplary integrated fluid treatment systems, in accordance with the present invention. FIG. 3A illustrates a system comprising a processing tank, and FIG. 3B illustrates a comparative system comprising a granular media filtration unit;

FIG. 4 is a schematic representation of an exemplary integrated stage of a fluid treatment system comprising piping, injectors and a pump-mixer, in accordance with an embodiment of the present invention;

FIGS. 5A and 5B illustrate an exemplary pump-mixer, in accordance with an embodiment of the present invention. FIG. 5A is a transparent side view, and FIG. 5B is a diagrammatic front view;

FIG. 6 illustrates a diagrammatic side view of an exemplary injector from a fluid treatment system, in accordance with an embodiment of the present invention;

FIGS. 7A-7(F), show the flow of material through exemplary processing tanks with separation and treatment combined in one unit, in accordance with an embodiment of the present invention; FIG 7A shows the horizontally uniform inclined plates lamella, FIG 7B shows horizontally non-uniform coarse to fine inclined plates, FIG. 7C shows horizontally non-uniform fine to coarse inclined plates, FIG. 7D shows vertically non-uniform fine to coarse inclined plates, FIG. 7E shows vertically non-uniform coarse to fine inclined plates and FIG. 7F shows sherwood plates lamella;

FIG. 8 shows a comparative hydraulic configuration for an integrated treatment system where two pump-mixers and two injection modules are used in parallel;

FIG. 9 illustrates a comparative hydraulic configuration for an integrated treatment system where two pump-mixers, two injection modules and two processing tanks are used in series;

FIG. 10 illustrates a comparative hydraulic configuration for an integrated treatment system where two pump-mixers and two injection modules are used in series;

FIG. 11 illustrates a comparative use of an integrated fluid treatment system where two pump-mixers and one injection module are used in series;

FIG. 12 is a chart showing exemplary averaged velocity gradients (G parameter) for different rotational speeds of a pump-mixer from an exemplary integrated fluid treatment system, in accordance with an embodiment of the present invention;

FIG. 13 is a graph showing exemplary effects of the rotational speed of a pump-mixer on the coagulant dose in an exemplary integrated fluid treatment system, in accordance with an embodiment of the present invention;

FIG. 14 is a graph showing exemplary effects of the rotational speed of a pump-mixer on the adsorbent dose in an exemplary integrated fluid treatment system, in accordance with an embodiment of the present invention;

FIG. 15 is a graph showing exemplary effects of the rotational speed of a pump-mixer on the disinfectant dose in an exemplary integrated fluid treatment system, in accordance with an embodiment of the present invention;

FIG. 16 is a schematic representation of an exemplary pilot plant, in accordance with an embodiment of the present invention;

FIG. 17 illustrates the chemical oxygen demand (COD) removal obtained in tested experimental trials of the pilot plant illustrated by way of example in FIG. 16, in accordance with an embodiment of the present invention;

FIG. 18 displays the coliform inactivation obtained in tested experimental trials of the pilot plant illustrated by way of example in FIG. 16, in accordance with an embodiment of the present invention;

FIG. 19 shows the sludge production obtained in tested experimental trials of the pilot plant illustrated by way of example in FIG. 16, in accordance with an embodiment of the present invention; and

FIG. 20 shows changes in dissolved gas concentration obtained in tested experimental trials of the pilot plant when a gaseous treating agent is injected in the contaminated fluid, illustrated by way of example in FIG. 16, in accordance with an embodiment of the present invention.

Unless otherwise indicated illustrations in the figures are not necessarily drawn to scale.

## SUMMARY OF THE INVENTION

To achieve the forgoing and other objectives and in accordance with the purpose of the present invention, an integrated method and system for treating contaminated fluids is presented. It is to be understood that the present invention is not limited to the particular methodology, compounds, materials, manufacturing techniques, uses, and applications, described herein, as these may vary. It is to be understood that the terminology used herein is used for the purpose of describing particular embodiments only, and is not intended to limit the scope of the present invention.

According to the present invention, a method for treating a contaminated fluid comprises the steps of: transporting a contaminated fluid and treating agents into a processing tank by way of at least one pump-mixer; and wherein said treating agents include a coagulant, and adsorbent and at least one oxidant or disinfectant which are introduced one by one into the contaminated fluid prior to the pump mixer, and wherein said pump-mixer causes rapid and vigorous mixing of said contaminated fluid and said treating agents thereby forming a uniform dispersion of the treating agents in the contaminated fluid; wherein said uniform dispersion enters an integrated processing tank, wherein treatment processes of coagulation, adsorption and oxidation/disinfection are completed in parallel and separating process residuals in form of sludge in said processing tank, and extracting the sludge from the treated fluid from the dual function separation and processing tank.

In one embodiment of the present invention, an integrated method for an exemplary sequence of the mode of action of a at least one pump-mixer comprises the steps of transferring and mixing, simultaneously, the contaminated fluid containing gaseous, solid or liquid contaminants, possibly having large clusters of particles, and treating agents/compositions in a processing tank. Furthermore, treating agents may be dispensed/injected into the body of at least one pump-mixer associated with the suction stream of the contaminated fluid in the suction pipe. A rapid and vigorous mixing is provided by the at least one pump-mixer. Such rapid and vigorous mixing enhances the treating agents' processing rates and it disassociates/disaggregates the large cluster of particles, if present in the contaminated fluid, into smaller size particles, thus making the contaminated fluid prawn to treatment. The process residuals originated by the treatment, usually in the form of "sludge", are then separated from the treated fluid. If catalytic or oxidative processes are promoted, rapid and vigorous mixing of treating agents within the contaminated fluid are instrumental in substantially enhancing such processing rates, for example by improving the efficiency of diffusion-limited reaction kinetics such as, but not limited to, the ones of oxidative or catalytic processes promoted by the treating agents.

In another embodiment of the present invention, a method for an exemplary sequence of the mode of action of an at least one pump-mixer comprises the steps of incorporating an ultrasonic treatment mechanism to the integrated process for treating the contaminated fluid, in-conjunction with an at least one pump-mixer. Incorporating an ultrasonic treatment mechanism to the process unit for treating the contaminated fluid may substantially improve the reaction and processing rates of the treating agents and consequently achieving relatively rapid reaction kinetics such as, but not limited to, the ones of catalytic and oxidative processes promoted by treating agents to further improve the overall efficiency of the foregoing integrated process.

In another embodiment of the present invention, a method for an exemplary sequence of the mode of action of a at least one pump-mixer comprises the steps of configuring a heating mechanism such as, but not limited to, microwaves, heating coils, or super heated stream to heat the contaminated fluid admixed with treating agents, to a predetermined range of temperature, to achieve, relatively rapid and improved reaction kinetics such as, but not limited to, the ones of catalytic processes caused by treating agents.

In another embodiment of the present invention, a method for an exemplary sequence of the mode of action of an at least one pump-mixer comprises the steps of incorporating an electromagnetic/electrostatic treatment mechanism for treating the contaminated fluid in conjunction with an at least one pump-mixer. Incorporating an electromagnetic/electrostatic treatment mechanism to the process unit for treating the contaminated fluid may substantially improve the reaction and processing rates and, consequently, the system efficiency by achieving relatively rapid reaction kinetics such as, but not limited to, the ones of oxidative and/or catalytic processes performed by treating agents, which further improve the overall efficiency of the foregoing integrated process.

The heating mechanism, in-conjunction with the high-frequency ultrasound mechanism and the electromagnetic/electrostatic mechanism, and the at least one pump-mixer may further substantially improve the overall reaction and processing rates and efficiency of the foregoing process for treating the contaminated fluids.

In another embodiment of the present invention, a method for an exemplary sequence of the mode of action of an at least one pump-mixer comprises the steps of configuring an at least one pump-mixer to an least one processing tank functioning as a "circulation" pump-mixer, to achieve rapid and vigorous mixing of the contaminated fluid admixed with treating agents may enhance reaction kinetics such as, but not limited to, the ones of catalytic and oxidative processes promoted by treating agents. It is to be noted that configuring an at least one pump-mixer to an least one processing tank functioning as a circulation pump-mixer may provide relatively uniform mixing for the contaminated fluid admixed with treating agents and also for a slurry phase contaminated fluid as well.

In another modified embodiment of the present invention, a method for an exemplary sequence of the mode of action of a at least one pump-mixer, comprising the steps of conducting the integrated fluid treatment process with the dispensing/injection stage, for example, but not limited to, when the treating agents are dispensed/injected using metering pumps, or when the injectors are located directly on the body of the at least one pump-mixer, which may be a suction pipe removably connected to the at least one pump-mixer.

In the present invention, the mode of action of an at least one pump-mixer comprises the steps of increasing the overall processing efficiencies by limiting the anti-synergistic actions between treating agents. This is achieved by the rapid mixing mode of action of the at least one pump-mixer which enables an instantaneous dispersion of the treating agents with the contaminated fluid. It is to be emphasized that the rapid mixing, generally, prevents the treating agents from coming into contact with each other prior to being dispersed in the matrix of the contaminated fluid. For example, without limitation, it is known to those skilled in the art that activated carbon quenches oxidants such as hydrogen peroxide and chlorine, however its quenching rate depends on the activated carbon and oxidant local concentrations; notably, such a quenching rate can be significantly reduced by lowering their concentrations by dilution/dispersion with the contaminated fluid using substantially rapid mixing

In the present invention, the system comprises a treatment unit. The treatment unit further comprises at least one pump-mixer unit having an at least one at least one pump-mixer. The at least one pump-mixer performs multiple functions, for example, but not limited to, a means for transferring the contaminated fluid admixed with treating agents, a means for rapid and vigorous mixing mode and a means for providing positive head pressure to the contaminated fluid. The rapid and vigorous mixing mode is used by the at least one pump-mixer for desegregating/disassociating large clusters of particles into smaller size particles present in the contaminated fluid, which ultimately allows the rapid penetration of the treating agents into the particle core thus preventing process inefficiency due to presence of particle-associated contaminants and their diffusion-limited reaction kinetics.

In another embodiment of the present invention, the treatment unit may further be equipped with at least one injector for delivering, either simultaneously or in a prescribed sequence, the liquid, solid or gaseous treating agents into the contaminated fluid to be treated.

In another embodiment of the present invention, the treatment unit may further be equipped with a processing tank having the dual function of treatment and separation unit such as, but not limited to, a clarifier, with or without internal surfaces such as, but not limited to, lamellas to streamline/direct the fluid, configured to simultaneously promote an enhanced separation of a gaseous and/or solid phase from the liquid by providing surface friction and/or advanced treatment (such as, but not limited to, coagulation/absorption/disinfection/oxidation) by generally ensuring that parcels of contaminated fluid (e.g., liquid, gaseous or solid component) receive the same treating agent dose and contact time.

In another embodiment of the present invention, the treatment unit may further be configured with a granular, polymeric or ceramic filter with pore size ranging from millimeters (e.g., sand or anthracite filters) to nanometers (e.g., nano-filtration membranes) to further substantially enhance gaseous, liquid or solid particles separation, advanced treatment (such as, but not limited to, coagulation/absorption/disinfection/ oxidation), and the removal of process residuals including, but not limited to, excess sludge and byproducts.

In the present invention, the treatment unit is equipped with at least one at least one pump-mixer to break down the contaminated solid, gaseous and liquid particles, potentially present into the contaminated fluid, into relatively, smaller size particles while simultaneously delivering gaseous, liquid or solid treating agents into the particle cores.

In another embodiment of the present invention, the treatment unit may also be equipped with one or more at least one pump-mixers, either connected in series or in parallel for simultaneously providing positive head pressure, and at least one uniform mixing of the contaminated fluid.

In another embodiment of the present invention, the treatment unit may be configured with at least one heating mechanism such as, but not limited to, microwaves, heating coils or super heated steam for heating the contaminated fluid in-conjunction with treating agents, to a predetermined temperature range, to achieve the rapid reaction kinetics such as, but not limited to, the ones of catalytic processes performed by treating agents to further improve the overall processing efficiency for treating the contaminated fluid.

In another embodiment of the present invention, the treatment unit may be configured with one or more high-frequency ultrasonic mechanisms to facilitate an integrated mixing of the contaminated fluid, and to achieve the rapid reaction kinetics such as, but not limited to, the ones of catalytic processes performed by treating agents to further substantially improve the overall processing efficiency for treating the contaminated fluid.

In another embodiment of the present invention, the treatment unit may be configured with an electromagnetic/electrostatic treatment mechanism for enhancing the processing rate of the contaminated fluid, as well as to facilitate the separation between the process residuals and the purified fluid.

In the present invention, the mode of action for the at least one pump-mixer is configured to implement simultaneous application of conflicting treating agents, since the rapid mixing promoted by the at least one at least one pump-mixer substantially increases the overall efficiency of the process due to limitation of the anti-synergistic actions of the treating agents. The rapid mixing, generally, prevents the treating agents form coming into contact with each other before they are dispersed in the contaminated fluid. For example, without limitation, it is known to those skilled in the art that activated carbon quenches oxidants such as hydrogen peroxide and chlorine, however its quenching rate depends on the activated carbon and oxidant local concentrations; notably, such a rate can be significantly reduced by lowering their concentrations by dilution with the contaminated fluid using substantially rapid mixing.

In another embodiment of the present invention, the method for fluid treatment may be used as a pre-treatment to improve the ability for treatment of subsequent processes such as, but not limited to, the ones carried out in mechanical, physical, biological and chemical processing units.

In another embodiment of the present invention, the method for fluid treatment system may be used as a post-treatment of effluents exiting previous treatment stages such as, but not limited to, the ones carried out in mechanical, physical, biological and chemical processing units.

Other features, advantages, and objects of the present invention will become more apparent and be more readily understood from the following detailed description, which should be read in conjunction with the accompanying drawings.

## DETAILED DESCRIPTION OF THE PREFERRED EMBODIMENTS

The present invention is best understood by reference to the detailed figures and description set forth herein.

Embodiments of the invention are discussed below with reference to the Figures. However, those skilled in the art will readily appreciate that the detailed description given herein with respect to these figures is for explanatory purposes as the invention extends beyond these limited embodiments. For example, it should be appreciated that those skilled in the art will, in light of the teachings of the present invention, recognize a multiplicity of alternate and suitable approaches, depending upon the needs of the particular application, to implement the functionality of any given detail described herein, beyond the particular implementation choices in the following embodiments described and shown. That is, there are numerous modifications and variations of the invention that are too numerous to be listed but that all fit within the scope of the invention. Also, singular words should be read as plural and vice versa and masculine as feminine and vice versa, where appropriate, and alternative embodiments do not necessarily imply that the two are mutually exclusive.

It is to be further understood that the present invention is not limited to the particular methodology, compounds, materials, manufacturing techniques, uses, and applications, described herein, as these may vary. It is also to be understood that the terminology used herein is used for the purpose of describing particular embodiments only, and is not intended to limit the scope of the present invention. It must be noted that as used herein and in the appended claims, the singular forms "a," "an," and "the" include the plural reference unless the context clearly dictates otherwise. Thus, for example, a reference to "an element" is a reference to one or more elements and includes equivalents thereof known to those skilled in the art. Similarly, for another example, a reference to "a step" or "a means" is a reference to one or more steps or means and may include sub-steps and subservient means. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures. Language that may be construed to express approximation should be so understood unless the context clearly dictates otherwise.

Unless defined otherwise, all technical and scientific terms used herein have the same meanings as commonly understood by one of ordinary skill in the art to which this invention belongs. Preferred methods, techniques, devices, and materials are described, although any methods, techniques, devices, or materials similar or equivalent to those described herein may be used in the practice or testing of the present invention. Structures described herein are to be understood also to refer to functional equivalents of such structures. The present invention will now be described in detail with reference to embodiments thereof as illustrated in the accompanying drawings.

From reading the present disclosure, other variations and modifications will be apparent to persons skilled in the art. Such variations and modifications may involve equivalent and other features which are already known in the art, and which may be used instead of or in addition to features already described herein.

Features which are described in the context of separate embodiments may also be provided in combination in a single embodiment. Conversely, various features which are, for brevity, described in the context of a single embodiment, may also be provided separately or in any suitable sub-combination.

References to "one embodiment," "an embodiment," "example embodiment," "various embodiments," etc., may indicate that the embodiment(s) of the invention so described may include a particular feature, structure, or characteristic, but not every embodiment necessarily includes the particular feature, structure, or characteristic. Further, repeated use of the phrase "in one embodiment," or "in an exemplary embodiment," do not necessarily refer to the same embodiment, although they may.

As is well known to those skilled in the art many careful considerations and compromises typically must be made when designing for the optimal manufacture of a commercial implementation any system, and in particular, the embodiments of the present invention. A commercial implementation in accordance with the spirit and teachings of the present invention may configured according to the needs of the particular application, whereby any aspect(s), feature(s), function(s), result(s), component(s), approach(es), or step(s) of the teachings related to any described embodiment of the present invention may be suitably omitted, included, adapted, mixed and matched, or improved and/or optimized by those skilled in the art, using their average skills and known techniques, to achieve the desired implementation that addresses the needs of the particular application.

It is to be understood that any exact measurements/dimensions or particular construction materials indicated herein are solely provided as examples of suitable configurations and are not intended to be limiting in any way. Depending on the needs of the particular application, those skilled in the art will readily recognize, in light of the following teachings, a multiplicity of suitable alternative implementation details.

An embodiment of the present invention and at least one variation thereof provides an integrated treatment system to purify an untreated or contaminated fluid. Some embodiments comprise a treatment unit with a dual function pump and rapid mixer unit (e.g., pump-mixer) formed by one or more pumps acting as a high-energy mixer and a number of injectors that deliver, either simultaneously or in a prescribed sequence, the liquid, solid or gaseous treating agents into a fluid to be treated. Some embodiments may incorporate a treatment unit with a dual function separation and processing tank such as, but not limited to, a clarifier, with or without internal surfaces such as, but not limited to, lamellas to streamline/direct the fluid, meant to simultaneously promote enhanced separation by providing surface friction and/or advanced treatment (such as, but not limited to, coagulation/absorption/disinfection/oxidation) by generally ensuring that liquid, gaseous or solid particle receive the same treating agent dose and contact time. Some embodiments use a granular, polymeric or ceramic filter with pore sizes ranging from millimeters (e.g., sand or anthracite filters) to nanometers (e.g., nanofiltration membranes) to further enhance gaseous, liquid or solid particles separation, coagulation/absorption/disinfection/oxidation as well as the removal of process residuals including, but not limited to, excess sludge and byproducts. Some embodiments comprise one or more pumps acting as high-energy mixers to break up the contaminated solid, gaseous and liquid particles into smaller ones while simultaneously delivering a gaseous, liquid or solid treating agent into the particle cores, thus allowing the treatment of challenging multiphase fluids such as, but not limited to, combined sewer overflow, raw effluents and sludge. Some embodiments use a system made of one or more pumps connected in series or in parallel able to simultaneously provide positive head pressure, high-energy mixing and milling to the constituents of an untreated or contaminated fluid. In some of these embodiments, the system functions without the use of injection or metering pumps.

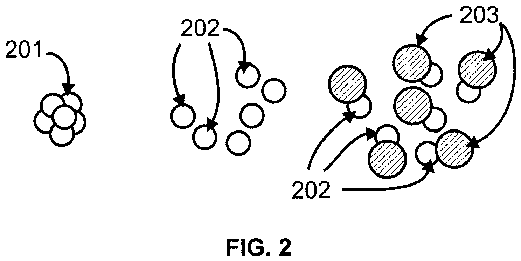

FIG. 2 shows an exemplary sequence of the mode of action of a high-energy pump-mixer, in accordance with an embodiment of the present invention. First, the fluid containing contaminated gaseous, solid or liquid contaminants embedded in a particles portion 201 are disaggregated into smaller sized particles denoted as a disaggregated particles portion 202 by a high-energy mixing pump. Then a treating agents portion 203 is injected into the fluid and vigorously mixed with the disaggregated particles portion 202 such that the targets of disaggregated particles portion 202 are reached and appropriate reactions may occur. As a non-limiting example, treating agents portion 203 may be a solid, gas or liquid.

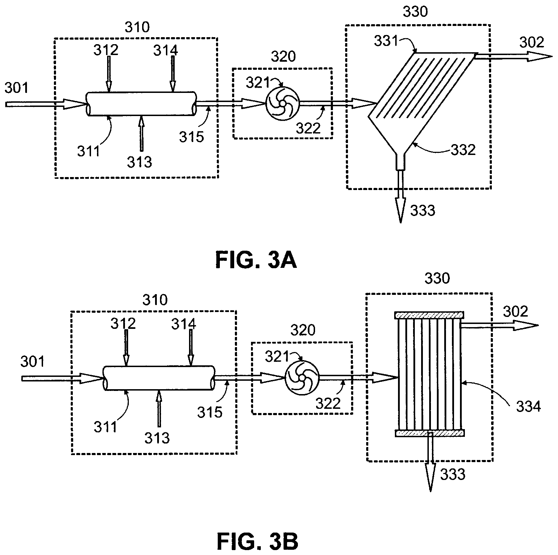

FIGS. 3A and 3B are schematic representations of exemplary integrated fluid treatment systems, in accordance with embodiments of the present invention. In a modified embodiment, the integrated treatment system can also operate without a separation stage. This is the case, for example, but not limited to, of a system used for operating in disinfection and oxidation mode where homogeneous (e.g. liquid phase) processes occur and no process residuals are formed. In another modified embodiment, the integrated fluid treatment may not require the injection module for example when the treating agents are delivered using metering pumps or when the injectors are located directly on the body of pump. FIG. 3A illustrates a system comprising a processing tank 331, and FIG. 3B illustrates a system comprising a granular media filtration unit 334. Referring to FIG. 3A, the present embodiment uses stage integration to combine pumping and mixing in a rapid mixing unit 320 equipped with a number of injectors in an injection stage 310 to deliver treating agents, followed by separation, disinfection and oxidation integrated in a coagulation/adsorption/oxidation unit 330 to aid in making the fluid treatment process more efficient and more cost effective than current methods which employ several processes in series, as shown by way of example in FIG. 1. An untreated fluid 301 enters injection stage 310 via a suction pipe 311. Furthermore, suction pipe 311 is connected to a pump-mixer 321. The present embodiment differentiates from prior art approaches at least in that the contaminated fluid can be introduced to the mixing/treatment via existing pipes or pumps (therefore the present embodiment does not necessarily require an intermediate reservoir). This is, for example, the case of municipal wastewater exiting membrane reactors (MR) as the membrane modules may deliver a MR-treated fluid already pressurized in pipes and, as such, could be directly transferred to the subsequent disclosed integrated treatment system without the use of any intermediate reservoirs. The liquid, gaseous or solid treating agents for the treatment process include a coagulant 312, an adsorbent 313 and an oxidant or disinfectant 314 which are introduced into suction pipe 311. These treating agents are introduced into suction pipe 311 one by one into the suction pipe. A mixture 315 of treating agents, coagulant 312, adsorbent 313, oxidant or disinfectant 314 and untreated fluid 301, then flows into rapid mixing unit 320. Pump-mixer 321 primarily performs two different tasks. Pump-mixer 321 is firstly used to provide mixture 315 with the needed energy for moving into coagulation/adsorption/oxidation unit 330 and further on into downstream units if needed; pump-mixer 321 also provides a high mixing gradient (e.g. high level of mixing), thus generally ensuring the uniform dispersion of treating agents, coagulant 312, adsorbent 313 and oxidant or disinfectant 314, into untreated fluid 301, even in the case of challenging viscous fluids with fast reaction kinetics. Once mixed, a mixture 322 exits pump-mixer 321 and enters integrated coagulation/adsorption/oxidation unit 330. In coagulation/adsorption/oxidation unit 330, treatment processes (i.e., coagulation, adsorption and oxidation) are completed in a parallel fashion in single-stage processing tank 331. The process residuals of the different processes are separated via enhanced settling in a settling hopper 332, and combination of the residuals as a sludge 333 is drained from the bottom of settling hopper 332. Finally, a treated fluid 302 exits the treatment system. In some embodiments, the internal cavities of the systems such as, but not limited to, the interior portion of pump-mixer 321 and processing tank 331, can be used as a support for coating catalytic material and/or for anchoring catalytic materials structured on surfaces or filling bodies such as, but not limited to, titanium dioxide, titanomagnetite or zerovalent iron to promote oxidative and/or catalytic reactions as a variance of, or as an addition to, the disinfection/oxidation step and provide advanced treatment to the contaminated fluid.

In some embodiments of the present invention, a method for an exemplary sequence of the mode of action of an at least one pump-mixer comprises the steps of incorporating an ultrasonic treatment mechanism to the integrated process for treating the contaminated fluid in-conjunction with an at least one pump-mixer. Incorporating an ultrasonic treatment mechanism to the process unit for treating the contaminated fluid may substantially, improve the reaction rate of the treating agents and consequently, achieving relatively rapid reaction kinetics such as, but not limited to, the ones of oxidative and/or catalytic processes performed by treating agents to further improve the overall efficiency of the foregoing integrated process.

In another embodiment of the present invention, a method for an exemplary sequence of the mode of action of a at least one pump-mixer comprises the steps of configuring a heating mechanism such as, but not limited to, heating coils, or superheated stream to heat the contaminated fluid admixed with treating agents, to a predetermined range of temperature, to achieve, relatively rapid and improved reaction kinetics such as, but not limited to, the ones of oxidative and/or catalytic processes caused by treating agents.

In another embodiment of the present invention, a method for an exemplary sequence of the mode of action of a at least one pump-mixer comprises the steps of configuring an electromagnetic/electrostatic mechanism such as, but not limited to, an illuminating device, magnetic separators, or electroseparators to enhance the oxidative and/or catalytic processing rates occurring in the contaminated fluid admixed with treating agents, as well as to provide a predetermined range of activation energy to fluid admixed with the catalyst.

The combination of heating mechanism, the high-frequency ultrasound mechanism and the electromagnetic/electrostatic mechanism, and the at least one pump-mixer may further substantially improve the overall efficiency of the foregoing process for treating the contaminated fluids.

Referring to FIG. 3B, a comparative scheme for separation of particles from the fluid is shown where the single-stage processing tank is replaced with granular media filtration unit 334. Those skilled in the art, in light of the present teachings, will readily recognize that various different types of filtration units may be used such as, but not limited to, granular media filtration units, polymeric membrane units, ceramic membrane units, etc. However, a filtration unit may follow a processing tank in the present invention.

In some embodiments, process residuals in the form of sludge 333 containing exhausted treating agents (coagulation/adsorption/oxidation) may be recycled upstream (either as they are or after appropriate treatment) to one of the injection modules using an injector located on the injection stage 310. In some other embodiments, a portion of mixture 322, treated fluid 302 or sludge 333 can be recycled upstream to one of the injection modules via the set of injectors in injection stage 310 to allow further treatment, either using metering pumps or exploiting the suction conditions generated by pump-mixer 321 and the set of injectors, and are typically employed to deliver fresh treating agents to the system.

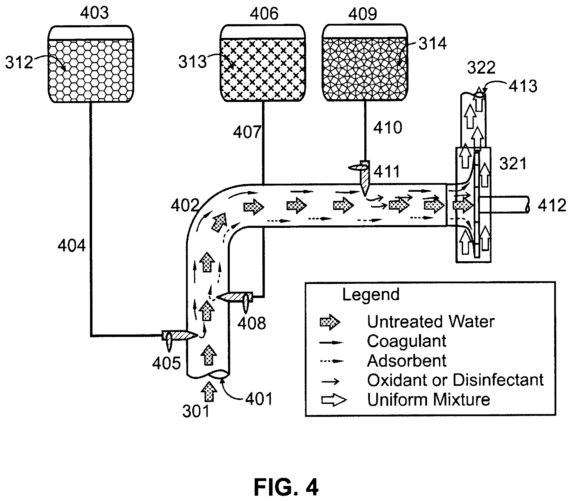

FIG. 4 is a schematic representation of an exemplary integrated stage of a fluid treatment system comprising injectors, mixers and pump-mixer 321, in accordance with an embodiment of the present invention. In the present embodiment, a contaminated fluid 301 enters an injection pipe 402 at an inlet location 401. In case the integrated treatment system of the present embodiment is employed to retrofit existing water treatment plant, the fluid could be introduced to the treatment using existing piping, pumps and/or gravity fed from clearwells. Several injection ports are located on injection pipe 402.. Alternate embodiments of the present invention may comprise more injectors to suit the needs of a particular system. In addition, some embodiments may enable injectors to be added or removed to enable the system to adapt to any changing requirements. In the present embodiment, coagulant 312, that is stored in a coagulant reservoir 403, moves through a capillary tube 404 to a coagulant injector 405, which may or may not be assisted by a metering pump. Similarly, adsorbent 313 flows through a capillary tube 407 from an adsorbent reservoir 406 to an injector 408. Finally, oxidant or disinfectant 314, that is stored in a reservoir 409, moves through a capillary tube 410 and is injected via a disinfectant/oxidant injector 411. In the present embodiment, coagulant 312, adsorbent 313 and oxidant or disinfectant 314 are injected at different points along injection pipe 402; however, in alternate embodiments, the injectors may be located in the same area of the injection pipe. In the present embodiment, the inhomogeneous mixture made by untreated fluid 301, coagulant 312, adsorbent 313 and oxidant or disinfectant 314, flows towards pump-mixer 321 through injection pipe 402. Pump-mixer 321, connected to an electrical motor (not shown) by a connecting shaft 412, generates high shear stresses in the fluid flow that lead to effective mixing of the treating agents with untreated fluid 301. A homogeneous mixture 322 exits an outlet 413 of pump-mixer 321 and is directed to a processing tank for further treatment such as, but not limited to, a settling/disinfection.portion.

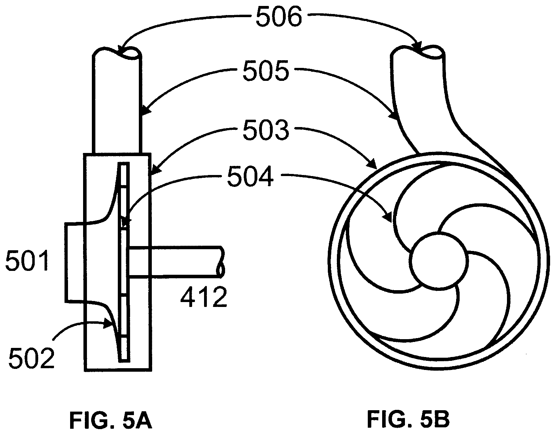

FIGS. 5A and 5B illustrate an exemplary mixing pump, in accordance with an embodiment of the present invention. FIG. 5A is a transparent side view, and FIG. 5B is a diagrammatic front view. In the present embodiment, fluid enters a pump eye 501 and is sucked into a pump propeller 502. A blades portion 504 in pump propeller 502 force the fluid to rotate quickly and to generate high shear rates in the fluid flow. These shear rates mix the treating agents and untreated fluid. Then, the fluid exits pump propeller 502 and enters a pump housing 503. Since pump propeller 502 rotates at a fast angular velocity and pump housing 503 is stationary, shear rates are generated by pump housing 503 as well. Shear rates can be controlled in several ways, for example, without limitation, by varying the pump type, flow rate and speed, by optimizing the gap between pump propeller 502 and pump housing 503, by using corrugated materials, etc. Decreasing the gap between pump propeller 502 and pump housing 503 also increases the shear rate. After a period of time, the fluid deviates from its rotational path in pump housing 503 and exits an outlet pipe 505 of the pump.

This deviation creates more shear rates in the fluid flow. These accumulated shear rates in the fluid flow enhance the mixing of the treating agents with the fluid and result in a homogeneous mixture which exits through a pump outlet 506. An electric motor (not shown) is connected to the pump via connecting shaft 412 and provides power for the pump. In alternate embodiments various differing power sources may be used to power the pump including, but not limited to, a gasoline motor, a crank, a steam or gas turbine, wind or flowing water on an external propeller, etc. It is to be understood that treating agents admixed with contaminated fluid may cause corrosion of the main/primary functional parts such as, but not limited to, impellers, suction inlet, and discharge outlet of the at least one high-energy pump-mixer. Therefore, to relatively, minimize corrosion of the primary functional parts, the construction material for the at least one high-energy pump-mixer may be comprised of, but is not limited to, high Nickel content stainless steel.

In the present embodiment, the mixing pump is able to provide positive head pressure and rapid and adjustable mixing of gaseous, liquid or solid treating agents into a contaminated flow stream. The rapid mixing of the pump enhances fast and diffusion-limited reaction kinetics such as, but not limited to, the ones of oxidative and/or catalytic processes performed by the treating agents. Furthermore, the high shear rates created by the pump are able to disaggregate contaminated particles while simultaneously delivering the treating agents to the particle core, as shown by way of example in FIG. 2. This is particularly useful for slurry phase fluid treatment such as, but not limited to, municipal and industrial wastewater sludge. Additionally, the pump according to the present embodiment may be used in a treatment system implementing the simultaneous application of conflicting treating agents since the rapid mixing promoted by the pump reduces process inefficiencies due to anti synergistic actions of the treating agents. The rapid mixing generally prevents the treating agents from coming into contact with each other before they are actually dispersed into the contaminated fluid. For example, without limitation, it is known to those skilled in the art that activated carbon quenches oxidants such as hydrogen peroxide and chlorine, however its quenching rate depends on the activated carbon and oxidant local concentrations; notably, such a rate can be significantly reduced by lowering their concentrations by dilution with the contaminated fluid using substantially rapid mixing.

Those skilled in the art, in light of the present teachings, will readily recognize that the pump described in the foregoing is for exemplary purposes and that various different types of pumps or pumps with different features may be used in alternate embodiments. For example, without limitation, direct lift, positive displacement pumps such as, but not limited to, gear pumps, progressing cavity pumps, roots-type pumps, peristaltic pumps, reciprocating-type pumps, compressed-air-powered double-diaphragm pumps, impulse pumps, hydraulic ram pumps, etc. may be used in some alternate embodiments. Some alternate embodiments may employ velocity pumps such as, but not limited to, centrifugal pumps, radial flow pumps, axial flow pumps, mixed flow pumps, eductor-jet pumps, etc. Density pumps, gravity pumps, or steam pumps may also be used in some alternate embodiments.

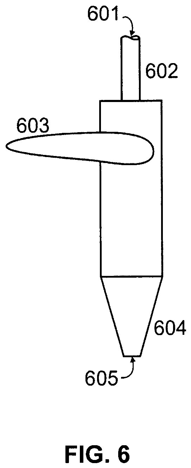

FIG. 6 illustrates a diagrammatic side view of an exemplary injector from a fluid treatment system, in accordance with an embodiment of the present invention. In the present embodiment, a treating agent enters an inlet 601 of the injector and flows through an inlet pipe 602 of the injector. In alternate embodiments, the injectors may be located on the main body of the pump rather than on a pipe or may be at a different depth in the fluid. The flow rate of the treating agent can be controlled by adjusting a handle 603 of an injector valve or may be assisted by an external metering pump. Alternatively, the treating agent may be pulled into the bulk fluid flow by the main pump of the system as the injectors are located in the suction zone of the system. The velocity of the treating agent increases in an injector nozzle 604 as the treating agents are introduced into the mainstream via an injector outlet 605. It is to be understood that the nozzles engaged in the operation for dispensing/injecting the treating agents to the body of the at least one high-energy pump-mixer may also cause corrosion of the construction material of the nozzles. Therefore, to relatively minimize corrosion of the construction material of the nozzles, the construction material for the nozzles may be comprise of, but not limited to, high Nickel content stainless steel.

Those skilled in the art, in light of the present teachings, will readily recognize that the injector described in the foregoing is for exemplary purposes and that various different types of injectors with different features may be used in alternate embodiments. For example, without limitation, other kind of injectors such as jets nozzles, high velocity nozzles, propelling nozzles, magnetic nozzles, spray nozzles, vacuum nozzles, or shaping nozzles as injectors can be used in alternate embodiments. Similarly, specially shaped injectors such as, but not limited to, L-shaped or angled injectors can be used for example, without limitation, to direct the treating agents towards a targeted region of the contaminated fluid or to generally prevent early mixing between the treating agents which may cause anti-synergistic action thus reducing the processing rates or generating conditions for local corrosion. In some alternate embodiments, treating agents can also be delivered to the contaminated fluid using a venturi injector as well as external metering pumps such as, but not limited to, small radial flow centrifugal pumps (i.e., booster pump), peristaltic pumps, membrane pumps, positive displacement pumps, etc.

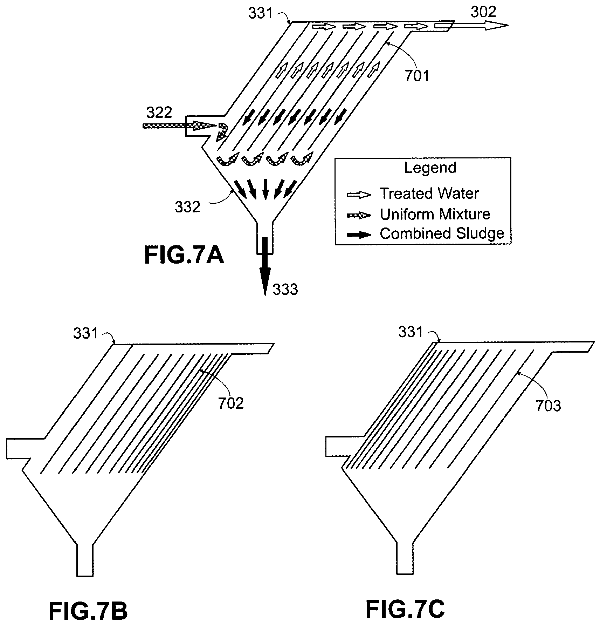

FIG. 7A-7F shows the flow of material through exemplary processing tank 331, in accordance with an embodiment of the present invention. In the present embodiment, mixture 322 comprising a fluid and treating agents enters processing tank 331. The flow of mixture 322 impinges to a parallel inclined plates portion 701 in processing tank 331 and enters a plate rack through side-entry plate slots. This crosscurrent entry method minimizes the risk of disturbing previously settled solids; however, different entry methods may be used in alternate embodiments. In the present embodiment, a small gap between parallel inclined plates portion 701 leads to a creeping laminar flow between parallel inclined plates portion 701, which produces enough time for the particle separation/settling and coagulation/absorption/disinfection/oxidation processes. Since the gap between parallel inclined plates portion 701 is narrow, mixture 322 flows between parallel inclined plates portion 701 slowly, and as mixture 322 flows upward, the solids settle on the parallel inclined plates portion 701 and slide into settling hopper 332 at the bottom of processing tank 331. Additionally, fluid particles gain an adequate treatment dose and contact time due to slow fluid motion between parallel inclined plates portion 701. The process residuals in the form of combined sludge 333 drains from the bottom of settling hopper 332. Finally, treated fluid 302 exits the top of processing tank 331.

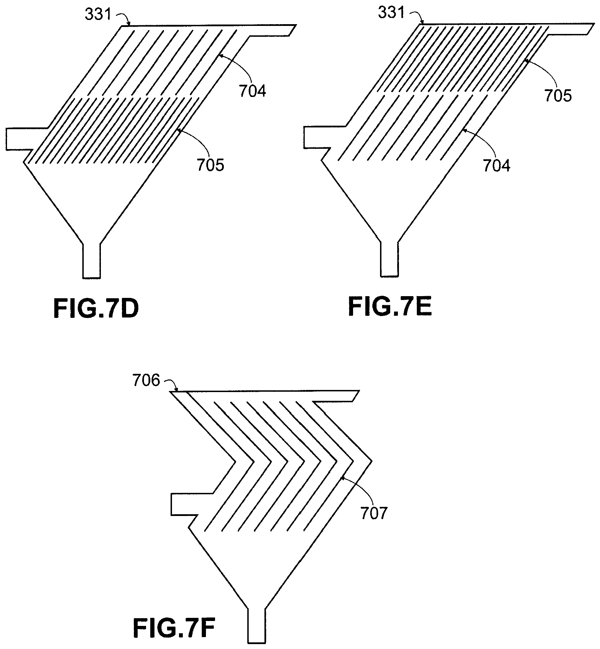

Those skilled in the art, in light of the present teachings, will readily recognize that the horizontally uniform plate spacing lamella described in the foregoing is for exemplary purposes and that numerous plate spacing and plate configurations may be used in alternate embodiments to offer the flexibility needed to handle variations in effluent characteristics. For example, without limitation, horizontally non-uniform coarse to fine inclined plates (FIG. 7B), horizontally non-uniform fine to coarse inclined plates (FIG. 7C), vertically non-uniform fine to coarse inclined plates (FIG. 7D), vertically non-uniform coarse to fine inclined plates (FIG. 7E) and sherwood plates lamella (FIG. 7F) may be used in some alternate embodiments. By altering the plate spacing (to allow for different solids loading ratios, settling rates, etc.) lamella may be sized appropriately for specific application such as, but not limited to, water treatment system. The lamellas can be adjusted either manually or using a mechanical device, depending on the treatment objectives.

Those skilled in the art, in light of the present teachings, will readily recognize that the processing tanks described in the foregoing is for exemplary purposes and that various different types of separation techniques or processing tanks with different features, membranes, or filters may be used in alternate embodiments. For example, without limitation, a circular or rectangular clarifier, with or without baffles, may be utilized in which contaminated fluid fully mixed with treating agents supplied through a tangential or radial pipe injector causing fluid to lower its velocity such that particle settling is allowed. Centrifugal settlers such as, but not limited to, hydro-cyclones can also be used in alternate embodiments to enhance the separation process. In these embodiments, the fluid rotation creates a vortex, which imparts centrifugal forces onto any solid particles within the fluid. These centrifugal forces move the particles away from the center of the tank, thus leaving a relatively clean fluid at the center. Similarly, a serpentine-like tank may be used in some alternate embodiments to increase the residence time and produce low speed flow, leading to separation of solid particles from the fluid stream. In addition, alternate physical, mechanical, chemical and biological separation processes can be used in alternate embodiments of the present invention. For example, without limitation, granular filters such as, but not limited to, sand and carbon filters, membrane filters such as, but not limited to, microfiltration, ultrafiltration and nanofiltration systems, magnetic separators, or hydrocyclones can be used in alternate embodiments to remove the delivered treating agents in their solid, liquid and gaseous state from the contaminated fluids.

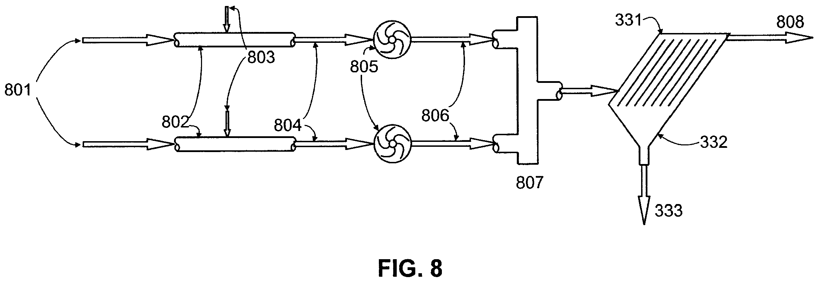

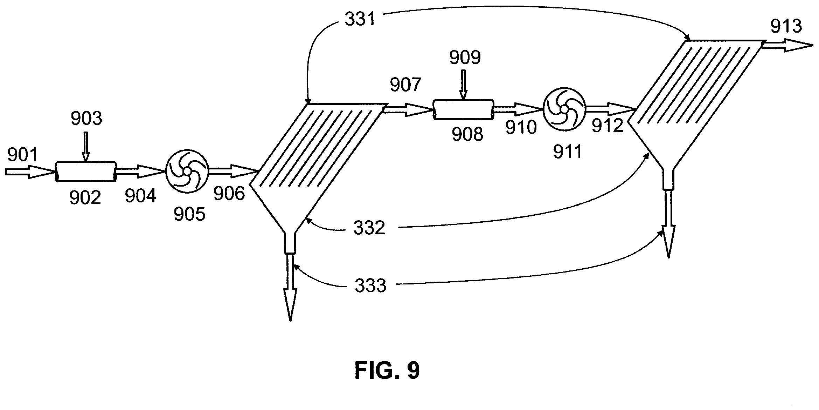

The mixing method of the present invention may be used in different configurations for easy integration into various types of systems. For example, without limitation, the method of the invention can be used in parallel and series configurations of mixing as illustrated by way of example in FIGS. 8 and 9.

FIG. 8 shows a hydraulic configuration for an integrated treatment system where a pumps portion 805 and two injectors modules are used in parallel, which is not in accordance with the present invention. As a non-limiting example, pumps portion 805 may be two pumps. This style is useful especially with high flow rates or cases where two or more treating agents need to be pre-mixed before another treating agent is delivered into the fluid. In the present configuration, an untreated fluid 801 enters a suction pipes portion 802 where a treating agents portion 803 is injected into the fluid flow. A mixture 804 of the treating agents and untreated fluid 801 enters pumps portion 805 to be mixed completely while being pumped. A mixed fluid 806 enters a collector 807 and is introduced into processing tank 331 where combined sludge 333 drains from the bottom of settling hopper 332. A treated fluid 808 exits the top of processing tank 331. More than two pumps or injectors may be used in this mode.

FIG. 9 illustrates s hydraulic configuration for an integrated treatment system where a pump 905 and a pump 911 are used in series, which is not in accordance with the present invention. This configuration may be used when treatment processes need to be carried out in a certain sequence. In the configuration, an untreated fluid 901 enters a first suction pipe 902 and a first treating agent 903 is injected into the fluid flow. A mixture 904 of untreated fluid 901 and first treating agent 903 are mixed by a first pump 905. Once mixture 904 becomes a homogenized mixture 906 of first treating agent 903 and untreated fluid 901, homogenized mixture 906 enters processing tank 331 and sludge 333 of the first treatment is drained from the bottom of settling hopper 332. A partially treated fluid 907 enters a second suction pipe 908. A second treating agent 909 is introduced to the main stream and a mixture 910 of partially treated fluid 907 and second treating agent 909 is mixed via a second pump 911. Then, once mixture 910 becomes a uniform mixture 912, uniform mixture 912 flows into processing tank 331 where sludge 333 is removed from the bottom of settling hopper 332 and a treated fluid 913 exits from the top of processing tank 331. More than two pumps, injectors or processing tanks may be used in this arrangement in alternate embodiments. In another alternative, multiple pumps and injectors may be placed in series before a single processing tank.

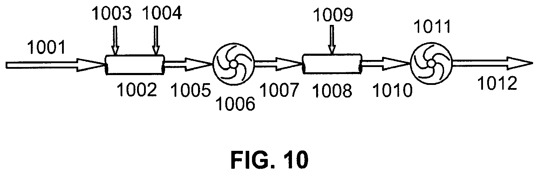

FIG. 10 illustrates an integrated treatment system with a first pump 1006 and a second pump 1011 in series, which is not in accordance with the present invention. In the system shown two treating agents, a first treating agent 1003 and a second treating agent 1004, are first premixed and then a third treating agent 1009 is added to the mixture. An untreated fluid 1001 enters a first suction pipe 1002 and first treating agent 1003 and second treating agent 1004 are injected into the fluid flow. A mixture 1005 of untreated fluid 1001, first treating agent 1003 and second treating agent 1004 are mixed by first pump 1006. Once mixture 1005 becomes a homogenized mixture 1007, it enters a second suction pipe 1008 where third treating agent 1009 is introduced into the main stream and a mixture 1010 of homogenized mixture 1007 and third treating agent 1009 is well mixed via second pump 1011. Then, once mixture 1010 becomes a uniform mixture 1012, uniform mixture 1012 enters the next stage in the treatment process, for example, without limitation, an integrated coagulation/adsorption/oxidation stage.

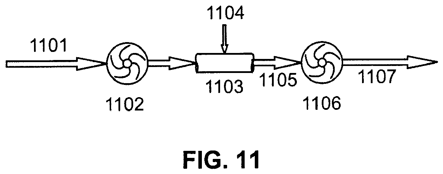

FIG. 11 illustrates an integrated fluid treatment system for chemigation purposes, which is not in accordance with the present invention. The system may be used to improve the chemigation process where the risk of groundwater or water resource pollution needs to be minimized. Chemigation is the process of delivering a fertilizer in agriculture. In the chemigation process, various chemical components such as, but not limited to, fertilizers or pesticides are mixed with the irrigation water. The chemigation process produces a uniform mixture while avoiding water resource pollution. In the present embodiment, a water portion 1101 is pulled into a first pump 1102 and then flows through a pipe 1103 where a treating agent 1104 is injected into water portion 1101. A mixture 1105 of treating agent 1104 and water portion 1101 then enters a second pump 1106, and a mixed fluid 1107 exits second pump 1106. Treating agent 1104 is injected after first pump 1102 is turned on. Thus, first pump 1102 generally prevents the escape of treating agent 1104 through the inlet of the system and the penetration of treating agent 1104 into the water resource. Second pump 1106 aids fluid flow and enhances the mixing of water portion 1101 with treating agent 1104.

The effects of the pump speed on the mixing of treating agents, numerical simulation and computations performed for different impeller angular velocities in an exemplary integrated fluid treatment system are shown by way of example in FIG. 4. Three cases with different pump angular velocities (i.e., 750 rpm, 1500 rpm and 3000 rpm) that lead to three different flow rates (i.e., 1.68 lit/s, 3.36 lit/s and 6.73 lit/s) are investigated. In the example cases, aluminum polychloride, carbon particles and NAClO were injected as model coagulant, adsorbent and disinfectant, respectively. The parameter "G" (e.g. the mixing gradient), obtained by the following equation, can represent the performance of mixing:

$$G = \frac{\mu_t}{\mu} \sqrt{ 2 \sum_i \left( \frac{\partial u_i}{\partial x_i} \right)^2 + \sum_{i,j} \left[ \frac{\partial u_i}{\partial x_j} + \frac{\partial u_j}{\partial x_i} \right]^2 } \qquad (1)$$

A flow scenario that produces a larger value for G results in improved mixing of the existing treating agents in the fluid flow. For incompressible fluid flow, the first term in the above equation ($\partial \mu_i / \partial x_i$) is zero due to the continuity equation, and thus G is reduced to the following equation:

$$G = \frac{\mu_t}{\mu} \sqrt{ \sum_{i,j} \left[ \frac{\partial u_i}{\partial x_j} + \frac{\partial u_j}{\partial x_i} \right]^2 } = \frac{\mu_t}{\mu} \sqrt{ S_{ij} S_{ij} } \qquad (2)$$

where $S_{ij} = \partial u_i / \partial x_j + \partial u_j / \partial x_i$ is the strain rate and $\sqrt{S_{ij} S_{ij}}$ is the strain rate magnitude.

Thus, the G parameter is calculated by the following equation:

$$G = \frac{\mu_t}{\mu} \times (strain\ rate\ magnitude) \qquad (3)$$

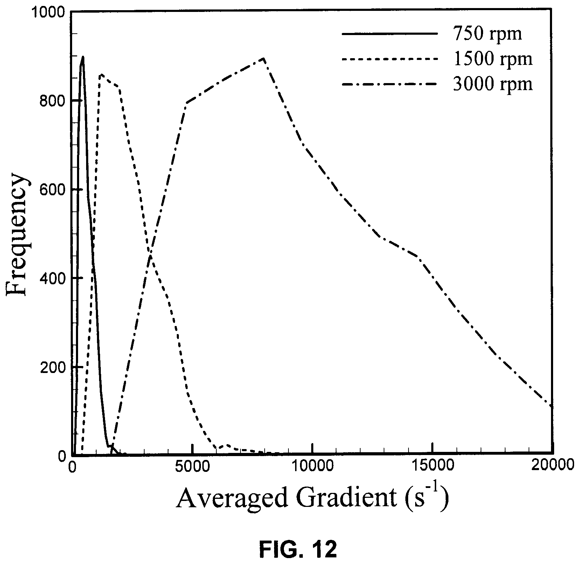

FIG. 12 is a chart showing exemplary averaged velocity gradients (G parameter) for different rotational speeds of a mixing pump from an exemplary integrated fluid treatment system, in accordance with an embodiment of the present invention. A statistically significant number of fluid particles (>6000) mimicking the contaminated fluid are injected at the inlet to investigate the averaged velocity gradients (G parameter). The number of fluid particles experiencing the same gradient (i.e., frequency) is plotted against the G parameter. The distribution of averaged G shows that increasing the pump angular velocity increases the averaged G experienced by fluid particles. Therefore, higher angular velocity results in improved mixing. This demonstrates that the G parameter can be controlled by varying the angular velocity of the pump. For example, without limitation, when the pump angular velocity exceeds 3000 rpm, the average G experienced by the fluid particles exceeds 9074 $s^{-1}$, that is, almost an order of magnitude greater than the design value of 700 to 1000 $s^{-1}$ commonly used to size rapid mixing units using blade mixers.

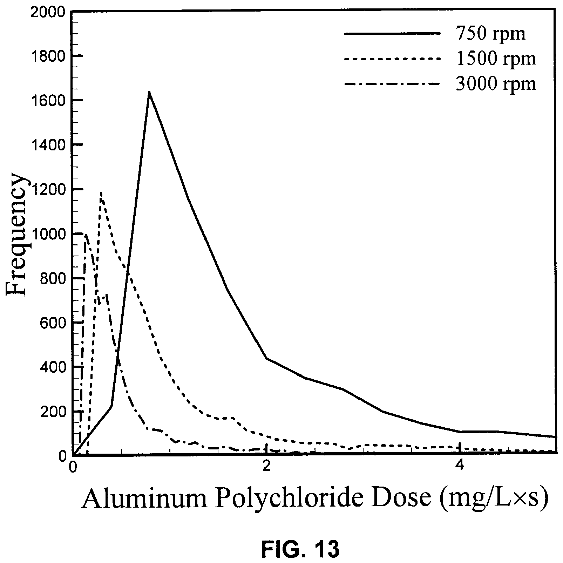

FIG. 13 is a graph showing exemplary effects of the rotational speed of a mixing pump on the coagulant dose in an exemplary integrated fluid treatment system, in accordance with an embodiment of the present invention. The number of fluid particles experiencing the same gradient (i.e., frequency) is plotted against the coagulant dose. In the present example, aluminum polychloride is used as the coagulant; however, various different coagulants may be used in alternate embodiments such as, but not limited to, aluminum hydroxide, iron (III) hydroxide, ferric chloride, ferrates, persulfates, any other positively or negatively charged anions and polyelectrolytes, and any combinations of the above.

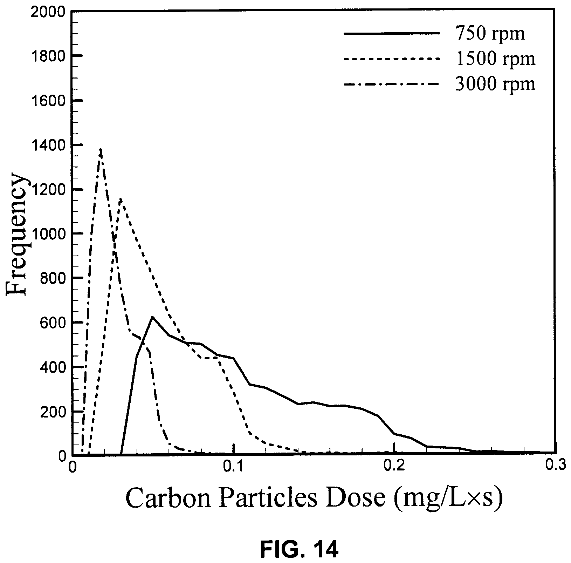

FIG. 14 is a graph showing exemplary effects of the rotational speed of a mixing pump on the adsorbent dose in an exemplary integrated fluid treatment system, in accordance with an embodiment of the present invention. The number of fluid particles experiencing the same gradient (i.e., frequency) is plotted against the adsorbent dose. In the present example, carbon particles are used as the adsorbent; however, various different natural or synthetic materials may be used as an adsorbent or super-adsorbents in alternate embodiments such as, but not limited to, natural and synthetic zeolites, biological flocs and synthetically manufactured adsorbents (polymers). Also, organic and inorganic catalysts such as, but not limited to, magnetite and titanium oxides can be used as absorbents in heterogeneous fenton or photofenton like processes.

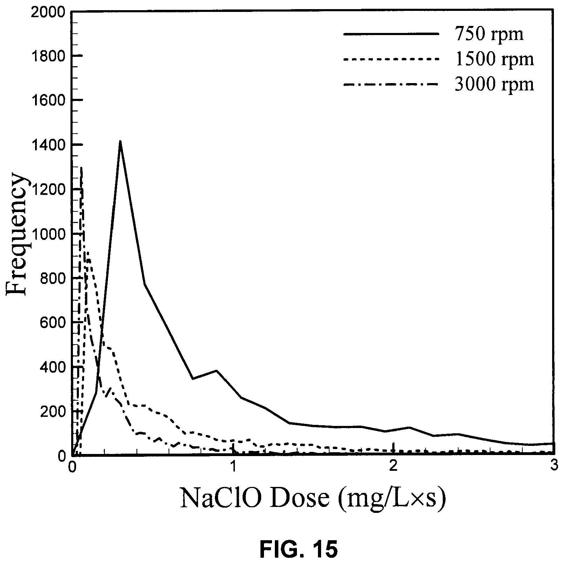

FIG. 15 is a graph showing exemplary effects of the rotational speed of a mixing pump on the disinfectant dose in an exemplary integrated fluid treatment system, in accordance with an embodiment of the present invention. The number of fluid particles experiencing the same gradient (i.e., frequency) is plotted against the disinfectant dose. In the present example, NaClO is used as the disinfectant; however, different disinfectants may be used in alternate embodiments such as, but not limited to, ozone, peracetic acid, potassium permanganate, hydrogen peroxide, ferrates, performic acid, chlorine dioxide and other organic and inorganic acids.

Referring to FIGS. 13 through 15, by increasing the pump angular velocity, the flow rate of the fluid increases and thus the resident time of the particles decreases. Here the residence time represents the average amount of time that particles spend in the system. Although in these exemplary cases the concentration of the treating agents is the same, smaller resident time for greater pump angular velocity leads to a smaller average dose of the treating agents.

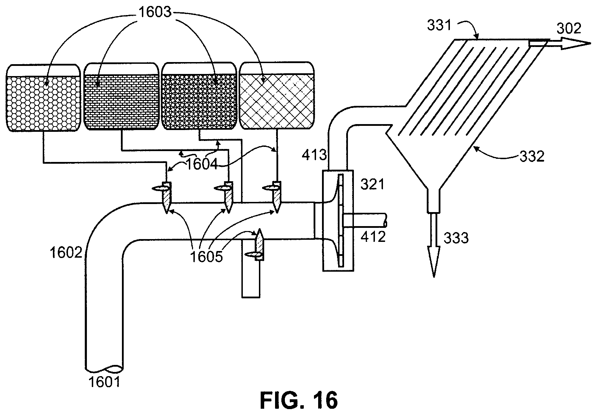

FIG. 16 is a schematic representation of an exemplary pilot plant, in accordance with an embodiment of the present invention. To investigate the performance of an integrated fluid treatment system, several experimental trials were carried out using the pilot plant. In this pilot plant, untreated water enters an inlet 1601 of a suction pipe 1602 where four treating agents 1603 are introduced into the flow via four injectors 1605. As a non-limiting example, suction pipe 1602 may be 80 mm in diameter. Treating agents 1603 are delivered to injectors 1605 by a flexible tubes portion 1604. As a non-limiting example flexible tubes portion 1604 may be four separate tubes. The mixture of the fluid and treating agents 1603 enters centrifugal pump-mixer 321, powered by connecting shaft 412 connected to an electrical motor. Pump-mixer 321 mixes the fluid and treating agents 1603. The mixed fluid then exits outlet 413 of pump-mixer 321 and enters processing tank 331. Combined sludge 333 is removed from the bottom of settling hopper 332 and treated fluid 302 leaves the pilot plant from the top of processing tank 331.

A number of experiments have been designed and carried out in order to estimate the treatment efficiency of this exemplary system in terms of chemical oxygen demand (COD) removal, coliform inactivation and sludge production. Four injectors are used in the present embodiment in order to deliver a known amount of coagulant, adsorbent, and disinfectant; however, fewer or more injectors may be used in alternate embodiments. In testing of the present embodiment, the following treating agents were tested: polyaluminium chloride (0-150 $\mu$L/L), powder activated carbon (0-30 mg/L), sodium hypochlorite (0-7.5 mg/L), and micronized zeolite (0-150 mg/L). Those skilled in the art, in light of the present teachings, will readily recognize that various different treating agents may be used in alternate embodiments. Table 1 summarizes the combinations tested in the present embodiment, designed according to a well-known statistical technique (e.g. orthogonal Latin square).

**Table 1**

| Combination # | Polyaluminium Chloride | Activated Carbon | Sodium Hypochlorite | Natural Zeolite |
|---|---|---|---|---|
| 01 | 0 | 20 | 0 | 0 |
| 02 | 50 | 30 | 0 | 0 |
| 03 | 100 | 10 | 5 | 0 |
| 04 | 150 | 0 | 5 | 0 |

(continued)

| Combination # | Polyaluminium Chloride | Activated Carbon | Sodium Hypochlorite | Natural Zeolite |
|---|---|---|---|---|
| 05 | 0 | 10 | 2.5 | 50 |
| 06 | 50 | 0 | 2.5 | 50 |
| 07 | 100 | 30 | 7.5 | 50 |
| 08 | 150 | 20 | 7.5 | 50 |
| 09 | 0 | 0 | 7.5 | 100 |
| 10 | 50 | 10 | 7.5 | 100 |
| 11 | 0 | 30 | 5 | 150 |
| 12 | 50 | 20 | 5 | 150 |
| 13 | 100 | 20 | 2.5 | 100 |
| 14 | 150 | 30 | 2.5 | 100 |
| 15 | 150 | 10 | 0 | 150 |
| 16 | 100 | 0 | 0 | 150 |

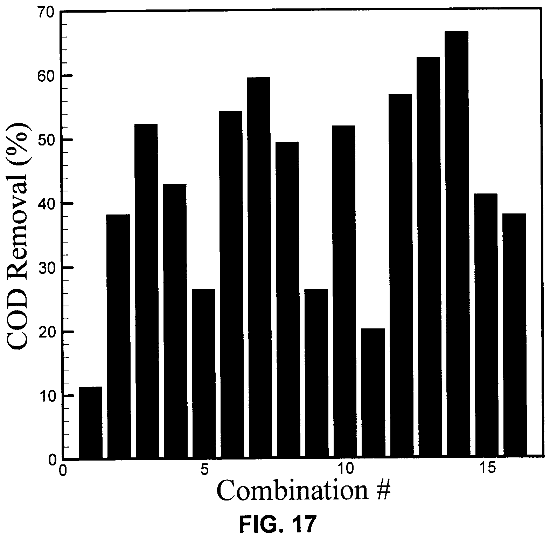

FIG. 17 illustrates the COD removal obtained in tested experimental trials of the pilot plant illustrated by way of example in FIG. 16, in accordance with an embodiment of the present invention.

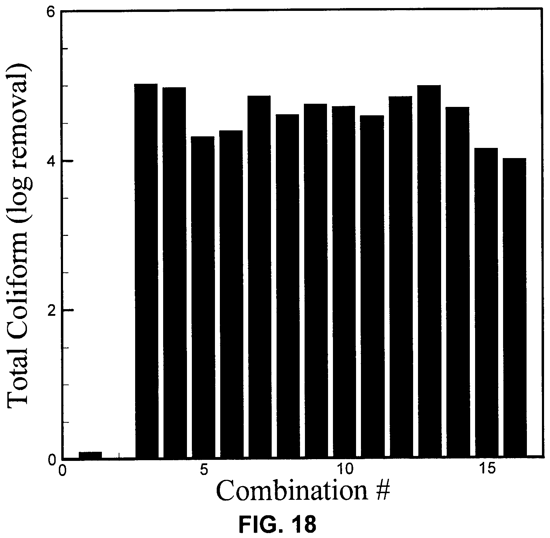

FIG. 18 displays the coliform inactivation obtained in tested experimental trials of the pilot plant illustrated by way of example in FIG. 16, in accordance with an embodiment of the present invention.

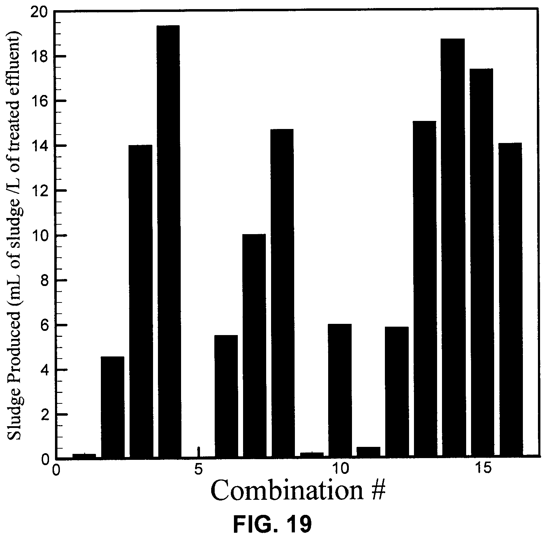

FIG. 19 shows the sludge production obtained in tested experimental trials of the pilot plant illustrated by way of example in FIG. 16, in accordance with an embodiment of the present invention.

Referring to FIGS. 17 through 19, combinations of concentrations of coagulant (i.e., poly aluminum chloride), adsorbent (i.e., activated carbon), disinfectant (i.e., sodium hypochlorite) and ion scavenger and adsorbent (i.e., natural zeolite) were tested in triplicate. The measured variables were COD [mg/L $O_2$], microbial concentration of total coliform, and sludge volume. The mean and the standard deviation as observed during the experiments are shown. Notably, combination # 13 provided excellent results with a 62% COD removal efficiency, 5 log total coliform inactivation and a sludge volume production as low as 15 mL sludge/L. Combination # 13 is also effective in removing micropollutants from wastewater such as phenols with average removal in the order of 50-70%.

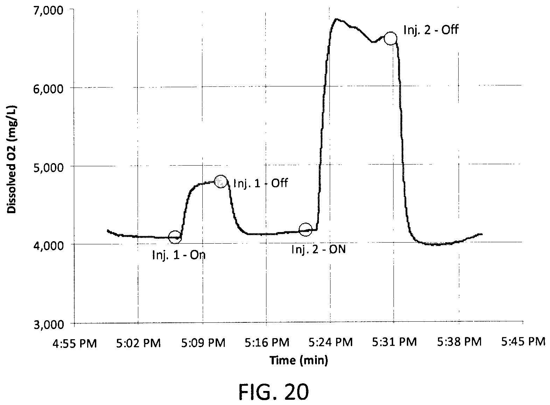

FIG. 20 shows changes in dissolved gas concentration obtained in tested experimental trials of the pilot plant when a gaseous treating agent is injected in the contaminated fluid, illustrated by way of example in FIG. 16, in accordance with an embodiment of the present invention. In this exemplary demonstration, when ambient air is injected as gaseous treating agent, the contaminated fluid dissolved oxygen concentration increases rapidly (up to 8 mg/L). It can be noticed that the dissolved oxygen concentration rapidly returns to background values (4 mg/L) when the injectors are turned OFF.

Those skilled in the art, in light of the present teachings, will readily recognize that the pump-mixer described in the foregoing is for exemplary purposes and that various different types of pumps or pumps with different features may be used in alternate embodiments. For example, without limitation, direct lift, positive displacement pumps such as, but not limited to, gear pumps, progressing cavity pumps, roots-type pumps, peristaltic pumps, reciprocating-type pumps, compressed-air-powered double-diaphragm pumps, impulse pumps, hydraulic ram pumps, etc. may be used in some alternate embodiments. Some alternate embodiments may employ velocity pumps such as, but not limited to, centrifugal pumps, radial flow pumps, axial flow pumps, mixed flow pumps, eductor-jet pumps, etc. Density pumps, gravity pumps, or steam pumps may also be used in some alternate embodiments.

Having fully described at least one embodiment of the present invention, other equivalent or alternative methods of providing an integrated fluid treatment system according to the present invention will be apparent to those skilled in the art. The invention has been described above by way of illustration, and the specific embodiments disclosed are not intended to limit the invention to the particular forms disclosed. For example, the particular implementation of the system may vary depending upon the particular type of application for which it is to be used. The systems described in the foregoing were directed to fluid treatment implementations; however, similar techniques are to use the integrated system for other types of chemical processes such as, but not limited, to, manufacturing processes, refining processes, food processing, etc. Non-fluid treatment implementations of the present invention are contemplated as within the scope of the present invention.

Claim elements and steps herein may have been numbered and/or lettered solely as an aid in readability and understanding. Any such numbering and lettering in itself is not intended to and should not be taken to indicate the ordering of elements and/or steps in the claims.

**Claims**

1. A method for treating a contaminated fluid (301); the method comprising the steps of:

   transporting a contaminated fluid (301) and treating agents into a processing tank (331) by way of at least one pump-mixer (321); and
   wherein said treating agents include a coagulant (312), an adsorbent (313) and at least one oxidant or disinfectant (314) which are introduced one by one into the contaminated fluid (301) prior to the pump mixer (321), and wherein said pump-mixer (321) causes rapid and vigorous mixing of said contaminated fluid (301) and said treating agents (312, 313, 314) thereby forming a uniform dispersion of the treating agents in the contaminated fluid (301);
   wherein said uniform dispersion enters an integrated processing tank (331), wherein treatment processes of coagulation, adsorption and oxidation/disinfection are completed in parallel and separating process residuals in form of sludge (333) in said processing tank (331), and

   extracting said sludge (333) from the treated fluid from said dual function separation and processing tank (331).

2. The method of claim 1, wherein said dual function separation and processing tank (331) comprises a clarifier with lamellas to streamline or direct the fluid, and wherein the step of completing in said dual function separation and processing tank treating of contaminated fluid by said coagulant (312), said adsorbent (313), and said at least one of said oxidant and said disinfectant (314) in said homogenous mixture includes
   directing parcels of said homogenous mixture through lamellas of said clarifier, said parcels receiving the same treating dose and contact time in the clarifier.

3. The method of claim 2, wherein directing parcels of said homogenous mixture through lamellas of said clarifier comprises directing parcels of said homogenous mixture through horizontally uniform inclined plates lamella, horizontally non-uniform coarse to fine inclined plates, horizontally non-uniform fine to coarse inclined plates, vertically non-uniform fine to coarse inclined plates, vertically non-uniform coarse to fine inclined plates or sherwood plates lamella.

4. The method of claim 1, wherein rapidly and vigorously mixing said inhomogenous mixture includes disaggregating relatively larger cluster of particles into relatively smaller size particles, and wherein said smaller size particles in-conjunction with said treating agents (312, 313, 314) substantially enhances the processing rate of treatment of contaminated fluid (301).

5. The method of claim 4, wherein rapidly and vigorously mixing said inhomogenous mixture by said pump-mixer includes generating accumulated shear rates in said inhomogenous mixture, said generated accumulated shear rates causing delivery of said coagulant (312), said adsorbent (313), and said at least one of said oxidant and said disinfectant (314) into a core of said larger cluster of particles to further enhance said processing rate.

6. The method of claim 1, wherein said contaminated fluid (301) comprises a liquid, a gas, a solid, a slurry phase fluid, or sludge, and wherein said slurry phase fluid or said municipal sludge are effectively treated by said high shear stresses.

7. The method of claim 1, wherein said at least one pump-mixer (321) acts as a relatively higher surface-to-volume ratio reactor, wherein said relatively higher surface-to-volume ratio reactor yields substantially higher mixing rate for said contaminated fluid (301) and said treating agents (312, 313, 314), and wherein said substantially higher mixing rate of said contaminated fluid (301) and said treating agents (312, 313, 314) further enhances said processing rate.

8. The method of claim 1, further comprising the step of using ultrasonic wave energy to accelerate the processing rate for treating said contaminated fluid (301), wherein said ultrasonic wave energy is generated by way of an ultrasonic treatment mechanism configured to said processing tank (330).

9. The method of claim 1, further comprising the step(s) of simultaneously performing coagulation, adsorption, disinfection, and/or oxidization of said contaminated fluid (301) in said processing tank (330).

10. The method of claim 1, wherein said rapid and vigorous mixing of said contaminated fluid (801) is achieved by operationally enabling at least one said at least one pump-mixer (805) installed in parallel.

11. The method of claim 1, in which at least two of said at least one pump-mixer (905, 911, 1006, 1011, 1102, 1106) are installed in series, and said rapid and vigorous mixing of said contaminated fluid (901, 1001, 1101) is achieved by at least one of said at least one pump-mixers installed in series.

12. The method of claim 11, in which at least two of said at least one pump-mixer (905, 911, 1006, 1011, 1102, 1106) are installed in parallel, and said rapid and vigorous mixing of said contaminated fluid (901, 1001, 1101) is achieved by essentially adjusting rotor speed of at least one of said at least one pump-mixers (905, 911, 1006, 1011, 1102, 1106) installed in parallel.

13. The method of claim 12, wherein said rapid and vigorous mixing of said contaminated fluid is achieved by essentially adjusting rotor speed for at least one of said at least one pump-mixer (905, 911, 1006, 1011, 1102, 1106) installed in series.


**Patentansprüche**

1. Verfahren zur Behandlung eines kontaminierten Fluids (301); wobei das Verfahren die folgenden Schritte umfasst:

    Transportieren von einem kontaminierten Fluid (301) und Behandlungsmitteln in einen Verarbeitungstank (331) mithilfe von mindestens einem Pumpenmischer (321); und
    wobei die Behandlungsmittel ein Koagulationsmittel (312), ein Adsorptionsmittel (313) und mindestens ein Oxidationsmittel oder Desinfektionsmittel (314) beinhalten, die nacheinander in das kontaminierte Fluid (301) vor dem Pumpenmischer (321) eingebracht werden, und wobei der Pumpenmischer (321) ein schnelles und heftiges Mischen des kontaminierten Fluids (301) und der Behandlungsmittel (312, 313, 314) bewirkt, wodurch eine einheitliche Dispersion der Behandlungsmittel in dem kontaminierten Fluid (301) gebildet wird;
    wobei die einheitliche Dispersion in einen integrierten Verarbeitungstank (331) eintritt, wobei Behandlungsprozesse von Koagulation, Adsorption und Oxidation/Desinfektion parallel abgeschlossen werden und Prozessreste in der Form von Schlamm (333) in dem Verarbeitungstank (331) getrennt werden, und
    Extrahieren des Schlamms (333) aus dem behandelten Fluid aus dem Doppelfunktionstrenn- und -verarbeitungstank (331) .

2. Verfahren nach Anspruch 1, wobei der Doppelfunktionstrenn- und -verarbeitungstank (331) ein Klärbecken mit Lamellen umfasst, um das Fluid zu vereinheitlichen oder zu leiten, und wobei der Schritt des Abschließens in dem Doppelfunktionstrenn- und - verarbeitungstank, der kontaminiertes Fluid durch das Koagulationsmittel (312), das Adsorptionsmittel (313) und mindestens eines von dem Oxidationsmittel und dem Desinfektionsmittel (314) zu dem homogenen Gemisch behandelt, beinhaltet:
    Leiten von Partien des homogenen Gemischs durch Lamellen des Klärbeckens, wobei die Partien die gleiche Behandlungsdosis und Kontaktzeit in dem Klärbecken erhalten.

3. Verfahren nach Anspruch 2, wobei das Leiten von Partien des homogenen Gemischs durch Lamellen des Klärbeckens ein Leiten von Partien des homogenen Gemischs durch horizontale, einheitliche, geneigte Plattenlamellen, horizontale, uneinheitliche, geneigte Grob-zu-Fein-Platten, horizontale, uneinheitliche, geneigte Fein-zu-Grob-Platten, vertikale, uneinheitliche, geneigte Fein-zu-Grob-Platten, vertikale, uneinheitliche, geneigte Grob-zu-Fein-Platten oder Sherwood-Plattenlamellen umfasst.

4. Verfahren nach Anspruch 1, wobei das schnelle und heftige Mischen des inhomogenen Gemischs ein Disaggregieren eines relativ größeren Clusters von Partikeln zu Partikeln mit relativ kleinerer Größe beinhaltet und wobei die Partikel mit kleinerer Größe in Verbindung mit den Behandlungsmitteln (312, 313, 314) die Verarbeitungsgeschwindigkeit der Behandlung von kontaminiertem Fluid (301) wesentlich erhöht.

5. Verfahren nach Anspruch 4, wobei das schnelle und heftige Mischen des inhomogenen Gemischs durch den Pumpenmischer ein Erzeugen von akkumulierten Schergeschwindigkeiten in dem inhomogenen Gemisch beinhaltet, wobei die erzeugen akkumulierten Schergeschwindigkeiten eine Abgabe des Koagulationsmittels (312), des Adsorptionsmittels (313) und des mindestens einen von dem Oxidationsmittel und dem Desinfektionsmittel (314) in einen Kern des größeren Clusters von Partikeln bewirkt, um die Verarbeitungsgeschwindigkeit weiter zu erhöhen.

6. Verfahren nach Anspruch 1, wobei das kontaminierte Fluid (301) eine Flüssigkeit, ein Gas, einen Feststoff, ein Aufschlämmungsphasenfluid oder einen Schlamm umfasst und wobei das Aufschlämmungsphasenfluid oder der Klärschlamm durch die hohen Scherbeanspruchungen wirksam behandelt werden.

7. Verfahren nach Anspruch 1, wobei der mindestens eine Pumpenmischer (321) als ein Reaktor mit einem relativ höheren Oberfläche-zu-Volumen-Verhältnis fungiert, wobei der Reaktor mit dem relativ höheren Oberfläche-zu-Volumen-Verhältnis eine wesentlich höhere Mischgeschwindigkeit für das kontaminierte Fluid (301) und die Behandlungsmittel (312, 313, 314) ergibt und wobei die wesentlich höhere Mischgeschwindigkeit des kontaminierten Fluids (301) und der Behandlungsmittel (312, 313, 314) die Verarbeitungsgeschwindigkeit weiter erhöht.

8. Verfahren nach Anspruch 1, weiterhin umfassend den Schritt eines Verwendens von Ultraschallwellenenergie, um die Verarbeitungsgeschwindigkeit zum Behandeln des kontaminierten Fluids (301) zu beschleunigen, wobei die Ultraschallwellenenergie mithilfe eines Ultraschallbehandlungsmechanismus, der zu dem Verarbeitungstank (330) aufgebaut ist, erzeugt wird.

9. Verfahren nach Anspruch 1, weiterhin umfassend den Schritt bzw. die Schritte eines gleichzeitigen Durchführens von Koagulation, Adsorption, Desinfektion und/oder Oxidation des kontaminierten Fluids (301) in dem Verarbeitungstank (330).

10. Verfahren nach Anspruch 1, wobei das schnelle und heftige Mischen des kontaminierten Fluids (801) durch operatives Aktivieren von mindestens einem von dem mindestens einen Pumpenmischer (805), die parallel installiert sind, erzielt wird.

11. Verfahren nach Anspruch 1, wobei mindestens zwei von dem mindestens einen Pumpenmischer (905, 911, 1006, 1011, 1102, 1106) in Reihe installiert sind und das schnelle und heftige Mischen des kontaminierten Fluids (901, 1001, 1101) durch mindestens einen von dem mindestens einen Pumpenmischer, die in Reihe installiert sind, erzielt wird.

12. Verfahren nach Anspruch 11, wobei mindestens zwei von dem mindestens einen Pumpenmischer (905, 911, 1006, 1011, 1102, 1106) parallel installiert sind und das schnelle und heftige Mischen des kontaminierten Fluids (901, 1001, 1101) durch wesentliches Justieren einer Rotorgeschwindigkeit von mindestens einem von dem mindestens einen Pumpenmischer (905, 911, 1006, 1011, 1102, 1106), die parallel installiert sind, erzielt wird.

13. Verfahren nach Anspruch 12, wobei das schnelle und heftige Mischen des kontaminierten Fluids durch wesentliches Justieren einer Rotorgeschwindigkeit für mindestens einen von dem mindestens einen Pumpenmischer (905, 911, 1006, 1011, 1102, 1106), die in Reihe installiert sind, erzielt wird.

**Revendications**

1. Procédé de traitement d'un fluide contaminé (301) ; le procédé comportant :

l'étape consistant à transporter un fluide contaminé (301) et des agents de traitement jusque dans un réservoir de traitement (331) par le biais d'au moins un mélangeur à pompe (321) ; et
dans lequel lesdits agents de traitement comprennent un coagulant (312), un adsorbant (313) et au moins un oxydant ou désinfectant (314) qui sont introduits un à un dans le fluide contaminé (301) avant le mélangeur à pompe (321), et dans lequel ledit mélangeur à pompe (321) entraîne un mélange rapide et vigoureux dudit fluide contaminé (301) et desdits agents de traitement (312, 313, 314) pour de ce fait former une dispersion uniforme des agents de traitement dans le fluide contaminé (301) ;
dans lequel ladite dispersion uniforme entre dans un réservoir de traitement intégré (331), dans lequel les processus de traitement de coagulation, d'adsorption et d'oxydation/désinfection sont réalisés en parallèle et séparent les produits résiduels de traitement sous la forme de boue (333) dans ledit réservoir de traitement (331), et
l'étape consistant à extraire ladite boue (333) du fluide traité en provenance du réservoir à double fonction de traitement et de séparation (331).

2. Procédé selon la revendication 1, dans lequel ledit réservoir à double fonction de traitement et de séparation (331) comporte un clarificateur doté de lamelles servant à un écoulement laminaire ou direct du fluide, et dans lequel l'étape consistant à réaliser dans ledit réservoir à double fonction de traitement et de séparation le traitement du fluide contaminé par ledit coagulant (312), ledit adsorbant (313), et ledit au moins l'un parmi ledit oxydant et ledit désinfectant (314) dans ledit mélange homogène comprend
l'étape consistant à diriger des paquets dudit mélange homogène au travers de lamelles dudit clarificateur, lesdits paquets recevant la même dose de traitement et le même temps de contact dans le clarificateur.

3. Procédé selon la revendication 2, dans lequel l'étape consistant à diriger des paquets dudit mélange homogène au travers de lamelles dudit clarificateur comporte l'étape consistant à diriger des paquets dudit mélange homogène au travers de lamelles à plaques inclinées uniformes à l'horizontale, de plaques inclinées de grossières à fines non uniformes à l'horizontale, de plaques inclinées de fines à grossières non uniformes à l'horizontale, de plaques inclinées de fines à grossières non uniformes à la verticale, de plaques inclinées de grossières à fines non uniformes à la verticale ou des lamelles à plaques de type sherwood.

4. Procédé selon la revendication 1, dans lequel l'étape consistant à mélanger de manière rapide et vigoureuse ledit mélange non homogène comprend l'étape consistant à désagréger tout groupe de particules relativement plus larges en des particules à taille relativement plus petite, et dans lequel lesdites particules à taille plus petite conjointement avec lesdits agents de traitement (312, 313, 314) améliorent sensiblement le taux de traitement du traitement du fluide contaminé (301).

5. Procédé selon la revendication 4, dans lequel l'étape consistant à mélanger de manière rapide et vigoureuse ledit mélange non homogène par ledit mélangeur à pompe comprend l'étape consistant à générer des vitesses de cisaillement accumulées dans ledit mélange non homogène, lesdites vitesses de cisaillement accumulées générées entraînant la distribution dudit coagulant (312), dudit adsorbant (313), et dudit au moins l'un parmi ledit oxydant et ledit désinfectant (314) dans un noyau dudit groupe de particules plus larges pour améliorer plus encore ladite vitesse de traitement.

6. Procédé selon la revendication 1, dans lequel ledit fluide contaminé (301) comporte un liquide, un gaz, un solide, un fluide en phase boueuse, ou de la boue, et dans lequel ledit fluide en phase boueuse ou ladite boue municipale sont traités de manière efficace par lesdites forces de cisaillement élevées.

7. Procédé selon la revendication 1, dans lequel ledit au moins un mélangeur à pompe (321) agit sous la forme d'un réacteur à rapport de surface et de volume relativement supérieur, dans lequel ledit réacteur à rapport de surface et de volume relativement supérieur produit une vitesse de mélange sensiblement supérieure pour ledit fluide contaminé (301) et lesdits agents de traitement (312, 313, 314), et dans lequel ladite vitesse de mélange sensiblement supérieure dudit fluide contaminé (301) et desdits agents de traitement (312, 313, 314) améliore plus encore ladite vitesse de traitement.

8. Procédé selon la revendication 1, comportant par ailleurs l'étape consistant à utiliser de l'énergie à ondes ultrasonores pour accélérer la vitesse de traitement pour traiter ledit fluide contaminé (301), dans lequel ladite énergie à ondes ultrasonores est générée par le biais d'un mécanisme de traitement par ultrasons configuré pour ledit réservoir de traitement (330).

9. Procédé selon la revendication 1, comportant par ailleurs l'étape consistant à effectuer de manière simultanée la coagulation, l'adsorption, la désinfection, et/ou l'oxydation dudit fluide contaminé (301) dans ledit réservoir de traitement (330).

10. Procédé selon la revendication 1, dans lequel ledit mélange rapide et vigoureux dudit fluide contaminé (801) est réalisé en activant de manière fonctionnelle au moins l'un desdits, au moins un, mélangeurs à pompe (805) installés en parallèle.

11. Procédé selon la revendication 1, dans lequel au moins deux desdits, au moins un, mélangeurs à pompe (905, 911, 1006, 1011, 1102, 1106) sont installés en série, et ledit mélange rapide et vigoureux dudit fluide contaminé (901, 1001, 1101) est réalisé par au moins l'un desdits, au moins un, mélangeurs à pompe installés en série.

**12.** Procédé selon la revendication 11, dans lequel au moins deux desdits, au moins un, mélangeurs à pompe (905, 911, 1006, 1011, 1102, 1106) sont installés en parallèle, et ledit mélange rapide et vigoureux dudit fluide contaminé (901, 1001, 1101) est réalisé essentiellement en ajustant la vitesse de rotor d'au moins l'un desdits, au moins un, mélangeurs à pompe (905, 911, 1006, 1011, 1102, 1106) installés en parallèle.

**13.** Procédé selon la revendication 12, dans lequel ledit mélange rapide et vigoureux dudit fluide contaminé est réalisé essentiellement en ajustant la vitesse de rotor pour au moins l'un desdits, au moins un, mélangeurs à pompe (905, 911, 1006, 1011, 1102, 1106) installés en série.

**FIG. 1**
**(PRIOR ART)**

EP 2 675 554 B1

**FIG. 2**

FIG. 3A

FIG. 3B

FIG. 4

**FIG. 5A**

**FIG. 5B**

FIG. 6

**FIG.7A**

Legend
⇨ Treated Water
⊳ Uniform Mixture
➤ Combined Sludge

**FIG.7B**

**FIG.7C**

331

704

705

**FIG.7D**

331

705

704

**FIG.7E**

706

707

**FIG.7F**

**FIG. 8**

FIG. 9

FIG. 10

**FIG. 11**

**FIG. 12**

FIG. 13

**FIG. 14**

**FIG. 15**

FIG. 16

FIG. 17

FIG. 18

**FIG. 19**

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6416213 B
- US 20100270240 A

- FR 2120292 A